(19) Europäisches Patentamt
European Patent Office
Office européen des brevets

(11) Veröffentlichungsnummer: **0 002 499**
**B1**

(12) # EUROPÄISCHE PATENTSCHRIFT

(45) Veröffentlichungstag der Patentschrift: **11.02.81**

(21) Anmeldenummer: **78101592.0**

(22) Anmeldetag: **07.12.78**

(51) Int. Cl.³: **C 09 D 3/58**, C 09 D 5/40, C 25 D 13/06, C 08 L 63/00, C 08 G 59/62, C 08 G 14/06

(54) **Lackbindemittel und ihre Verwendung für die kathodische Elektrotauchlackierung.**

(30) Priorität: **15.12.77 DE 2755908**

(43) Veröffentlichungstag der Anmeldung: **27.06.79 (Patentblatt 79/13)**

(45) Bekanntmachung des Hinweises auf die Patenterteilung: **11.02.81 Patentblatt 81/06**

(84) Benannte Vertragsstaaten: **DE FR GB NL**

(56) Entgegenhaltungen:
**FR - A - 2 226 445**
**FR - A - 2 268 051**
**FR - A - 2 324 697**
**FR - A - 2 333 838**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2,14**
**D-6800 Mannheim (DE)**
Erfinder: **Schupp, Eberhard, Dr.**
**Tilsiter Weg 4**
**D-6830 Schwetzingen (DE)**
Erfinder: **Blum, Rainer**
**Bannwassterstrasse 58**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

EP 0 002 499 B1

# Lackbindemittel und ihre Verwendung für die kathodische Elektrotauchlackierung

Die Erfindung betrifft Lackbindemittel auf Basis von Umsetzungsprodukten von Mannich-Basen mit Epoxidharzen, die olefinisch ungesättigte Alkylphenole eingebaut enthalten, sowie ihre Verwendung in protonierter, wasserverdünnbarer Form als kationische Elektrotauchlack-Bindemittel.

Kationische Elektrotauchlack-Bindemittelsysteme, die Urethan-, Amin- und gegebenenfalls Hydroxylgruppen enthalten, sind bereits bekannt, z.B. aus den DE-OS 20 57 799, 21 65 361, 22 52 536 und 23 63 074, sowie der GB-PS 1 302 328. Diese Lacke zeigen unter anderem bei Korrosionsschutz, Umgriff oder Badstabilität gute Ergebnisse, sie können jedoch, was die Gesamtheit der Bindemitteleigenschaften angeht, noch nicht voll befriedigen. Ein wesentlicher Mangel der bekannten Systeme liegt unter anderem darin, daß sie sich nicht in dem bei der anodischen Elektrotauchlackierung angewandten pH-Bereich zwischen 7 und 9 verarbeiten lassen. Ein Nachteil dieser Systeme ist, daß die angegebenen Vernetzungsreaktionen z.T. nicht auf den erwünschten pH-Bereich abgestimmt sind.

In den DE-OS 23 20 301, 23 57 075, 24 19 179 und 25 54 080 sind kationische Elektrotauchlack-Bindemittel beschrieben, die sich unter anderem durch sehr guten Korrosionsschutz auszeichnen und im alkalischen pH-Bereich über 7 abgeschieden werden können. Es handelt sich um Umsetzungsprodukte von Mannich-Basen aus kondensierten Phenolen, sekundären Aminen und Formaldehyd mit Epoxidharzen.

Ein Nachteil dieser Bindemittel ist es, daß sie nicht in allen Fällen mit den zur Lackherstellung üblichen Pigmenten und Füllstoffen direkt verarbeitet werden können, sondern daß die Pigmente und Füllstoffe mit geeigneten Netzmitteln in einem vorgeschalteten Schritt behandelt werden müssen.

Der vorliegenden Erfindung lag die Aufgabe zugrunde, kationische Elektrotauchlack-Bindemittel aufzuzeigen, die in den wesentlichen Bindemitteleigenschaften den an sie gestellten Anforderungen weitgehend gerecht werden. Insbesondere sollten Bindemittel bereitgestellt werden, die die obengenannten Nachteile nicht aufweisen und sich darüber hinaus in ihrer protonierten Form in wäßrigem Medium mit Pigmenten und Füllstoffen vorteilhaft verarbeiten lassen.

Überraschenderweise erreicht man dieses Ziel durch Einbau bestimmter olefinisch ungesättigter Alkylphenole in die Harzkörper, bevorzugt solcher, die sich von Cardanol® ableiten.

Gegenstand der Erfindung ist ein im wesentlichen epoxidgruppenfreies Lackbindemittel auf Basis eines Umsetzungsproduktes von

A) 25 bis 90 Gewichtsprozent Mannich-Basen aus

($a_1$) mindestens einem äthergruppenfreien, mehrwertigen Phenol, das zwei oder mehr aromatische Ringe enthält, und/oder

($a_2$) mindestens einem mindestens eine Äthergruppe enthaltenden ein- oder mehrwertigen Phenol, das zwei oder mehr aromatische Ringe enthält

($b_1$) mindestens einem sekundären Amin, das ein oder zwei Hydroxylalkylgruppen enthält, gegebenenfalls im Gemisch mit

($b_2$) sekundären Dialkyl- oder Dialkoxyalkylaminen, und

(c) Formaldehyd oder Formaldehyd bildenden Verbindungen

und

B) 75 bis 10 Gewichtsprozent mindestens eines Epoxidharzes, dadurch gekennzeichnet, daß das Umsetzungsprodukt aus (A) und (B) zusätzlich ein olefinisch ungesättigtes Alkylphenol der Formel (I)

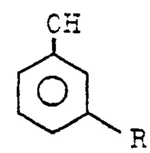

eingebaut enthält, mit der Maßgabe, daß R für einen eine bis drei C-C-Doppelbindungen enthaltenden Rest mit 11 bis 19 Kohlenstoffatomen steht.

Bevorzugte Ausführungsformen der erfindungsgemäßen Lackbindemittel sind solche, die als olefinisch ungesättigtes Alkylphenol der Formel (I) Cardanol® eingebaut enthalten, sowie solche, für die als Komponente ($a_1$) ein zwei phenolische Hydroxylgruppen enthaltendes Kondensationsprodukt aus einem Phenol und Cardanol® bzw. als Komponente ($a_2$) ein Umsetzungsprodukt aus einem Epoxidharz, Cardanol®, Bisphenol A und einem teilweise verkappten aliphatischen oder aromatischen Diisocyanat bzw. als Komponente (B) ein Epoxidgruppen und verkappte Isocyanatgruppen enthaltendes Umsetzungsprodukt aus Epoxidharz, Cardanol® und einem teilweise verkappten Di- oder Polyisocyanat verwendet wird. Besonders bevorzugt sind erfindungsgemäße Lackbindemittel, die 0,5 bis 50 Gew. % des olefinisch ungesättigten Alkylphenols der Formel (I) bzw. Cardanol® eingebaut enthalten.

Gegenstand der vorliegenden Erfindung ist außerdem die Verwendung der erfindungsgemäßen Lackbindemittel in protonierter Form zur kathodischen Elektrotauchlackierung von Metallteilen.

Die erfindungsgemäßen Lackbindemittel lassen sich mit den zur Lackherstellung üblichen Pigmenten und Füllstoffen direkt verarbeiten, ohne daß letztere vorher mit Netzmitteln behandelt werden müssen. Ein weiterer wesentlicher Vorteil der erfindungsgemäßen Lackbindemittel besteht darin, daß die eingebauten ungesättigten Alkylphenole über ihre olefinischen Doppelbindungen bei der Vernetzung mitbeteiligt sind.

Zu den Aufbaukomponenten der erfindungsgemäßen Lackbindemittel ist im einzelnen folgendes auszuführen.

Die erfindungsgemäßen Lackbindemittel bzw. deren Aufbaukomponenten ($a_1$), ($a_2$) und/oder (B) enthalten olefinisch ungesättigte Alkylphenole der allgemeinen Formel (I)

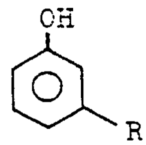

eingebaut, worin R für einen eine bis drei, vorzugsweise zwei, C-C-Doppelbindungen enthaltenden Rest mit 11 bis 19, vorzugsweise 13 bis 17 Kohlenstoffatomen steht. Die erfindungsgemäß verwendeten äthylenisch ungesättigten Alkylphenole können auf verschiedene Weise gewonnen werden. Besonders leicht und preiswert zugänglich sind sie in Form von Cashew-Nußschalenöl. Dabei handelt es sich um ein natürlich vorkommendes Produkt, welches aus der schwammigen Zwischenschicht zwischen Kern und Nußschale von Anacardium occidentale gewonnen wird. Die in kalt extrahiertem Cashew-Nußschalenöl zu etwa 90 % enthaltene Anacardsäure (X = H, Y = COOH)

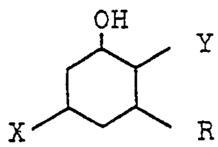

geht bei der industriellen Aufarbeitung unter Decarboxylierung in Cardanol® (X, Y = H) über. Handelsübliches Cashew-Nußschalenöl besteht daher überwiegend aus Cardanol® mit untergeordneten Mengen an Cardol (X = OH, Y = H) und polymerisiertem Material.

Bei R handelt es sich um eine Alkylenseitenkette mit vorwiegend zwischen 13 und 17 Kohlenstoffatomen und 1 bis 3, überwiegend 2, äthylenisch ungesättigten Doppelbindungen.

Für den erfindungsgemäßen Zweck kann dieses handelsübliche Cashew-Nußschalenöl direkt eingesetzt werden, es kann sich jedoch als zweckmäßig erweisen, das durch Destillation im Vakuum aus Cashew-Nußschalenöl in bis zu 90 %iger Ausbeute gewinnbare reine Cardanol® zu verwenden. Dabei handelt es sich um ein Gemisch langkettiger 3-Alkylenphenole, z.B. 3-(8,11-Pentadecadienyl)-phenol.

Dem Cardanol® I kommt die Formel

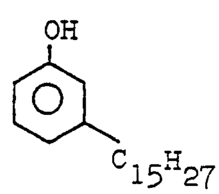

zu.

($a_1$) Zur Herstellung der Mannichbase (A) eignen sich als Äthergruppen-freie mehrwertige Phenole mit zwei oder mehr aromatischen Ringen beispielsweise solche der allgemeinen Formel

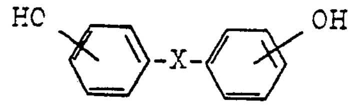

wobei die Hydroxylgruppen in ortho- oder para-Stellung zu X stehen und X für einen geradkettigen oder verzweigten zweiwertigen aliphatischen Rest mit 1 bis 3 Kohlenstoffatomen, oder für $SO_2$, SO, O oder $CH_2$-NR-$CH_2$ steht, und R einen Alkylrest mit 1 bis 6 Kohlenstoffatomen oder einen Hydroxyalkyl- oder Alkoxyalkylrest bedeutet; bevorzugt ist Bisphenol A. Besonders bevorzugt als Komponente ($a_1$) sind Umsetzungsprodukte von Phenolen mit Cardanol®. Kombinationen dieser Umsetzungsprodukte mit Phenol oder Bisphenol bzw. Mannich-Kondensationsprodukte aus phenol und/oder Alkylphenol, primärem Amin und Formaldehyd nach der DE-OS 27 11 385 oder niedrig-molekulare Umsetzungsprodukte aus Phenolen und Formaldehyd, sogenannte Novolake, sind ebenfalls geeignet.

($a_2$) Als mindestens eine Äthergruppe enthaltende ein- oder mehrwertige Phenole mit 2 oder mehr aromatischen Ringen kommen beispielsweise in Betracht Produkte der allgemeinen Formel

$$HO - B - [O - E - O]_n - H \quad \text{bzw.}$$

$$HO - B - [O - E - O]_n - P$$

wobei B für den Rest 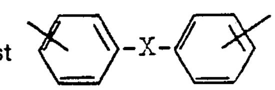 steht

und X die oben angegebene Bedeutung hat, E für einen Hydroxylgruppen enthaltenden, durch Addition einer Epoxidverbindung an eine phenolische Hydroxylgruppe erhaltenen Rest, P für phenyl oder für einen gegebenenfalls eine ungesättigte aliphatische Gruppe besitzenden Alkylphenylrest sowie n für eine ganze Zahl von 1 bis 3 steht, und wobei als Epoxidverbindungen (für E) bevorzugt Epoxidharze wie z.B. die Diglycidyläther von Bisphenol A, Pentaerythrit, Glycerin, Trimethylolpropan, Glykol, Glykoläther und anderer mehrwertiger, vorzugsweise zwei- bis vierwertiger Alkohole eingesetzt werden.

Andere geeignete Verbindungen mit Epoxidgruppen sind stickstoffhaltige Diepoxide, wie sie in der US-PS 3 365 471 beschrieben sind, Epoxidharze aus 1,1-Methylen-bis-(5-substituiertem Hydantoin) nach der US-PS 3 391 097, Diepoxide

aus Bisimiden nach US-PS 3 450 711, epoxidierte Aminomethyl-diphenyloxide nach US-PS 3 312 664, heterocyclische N,N'-Diglycidylverbindungen nach US-PS 3 503 979, Aminoepoxyphosphate nach GB-PS 1 172 916 oder 1,3,5-Triglycidylisocyanurate und andere in der Technik gut bekannte Materialien, die Epoxidgruppen enthalten, wie z.B. Dicyclopentadiendioxid und Limonendioxid sowie epoxidierte Butadienöle. Besonders bevorzugt als Komponente ($a_2$) sind Umsetzungsprodukte von Diglycidyläthern des Bisphenol A oder mehrwertiger aliphatischer Alkohole, wie Pentaerythrit, Trimethylolpropan und Glycerin, mit Bisphenol A und den oben genannten olefinisch ungesättigten Alkylphenolen, wie Cardanol® und gegebenenfalls Phenol. Solche Produkte weisen im allgemeinen Molekulargewichte von 900 bis 1 800 und Epoxidwerte von 0,004 bis 0,01 auf und können beispielsweise bei Temperaturen zwischen 160 und 180 °C, bei Anwesenheit von Reaktionskatalysatoren bei entsprechend niedrigeren Temperaturen, hergestellt werden.

Für den an sich bevorzugten Fall, daß Gemische der Komponenten ($a_1$) und ($a_2$) eingesetzt werden, liegt das Gewichtsverhältnis der beiden Komponenten zwischen 1 : 0,1 und 1 : 5.

($b_1$) Als sekundäre Amine ($b_1$), die mindestens eine Hydroxyalkylgruppe enthalten, eignen sich beispielsweise Alkyläthanolamine oder Alkylisopropanolamine mit 1 bis 6 Kohlenstoffatomen in der Alkylgruppe. Bevorzugt sind jedoch Dialkanolamine von Alkoholen mit 2 bis 6 Kohlenstoffatomen, insbesondere Diäthanolamin sowie Gemische dieser Dialkanolamine mit Alkylalkanolaminen.

Die sekundären Amine ($b_1$), die in den Mannich-Basen A) als Dialkanolaminomethylgruppen und Alkylalkanolaminomethylgruppen eingebaut sind, sind für den Grad der Dispergierbarkeit der Bindemittel in dem gewünschten pH-Bereich von 7,0 bis 9,0 und für die Vernetzung des Systems von wesentlicher Bedeutung.

($b_2$) Als sekundäre Alkylamine ($b_2$), die gegebenenfalls zusammen mit den Hydroxyalkylgruppen-haltigen Aminen ($b_1$) für die Herstellung der Mannich-Basen eingesetzt werden, eignen sich solche der allgemeinen Formel

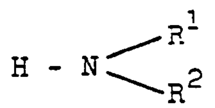

wobei $R^1$ und $R^2$ gleich oder verschieden sind und für einen geradkettigen oder verzweigten aliphatischen Rest mit 2 bis 10 Kohlenstoffatomen, der gegebenenfalls Alkoxygruppe enthält, stehen. Derartige geeignete sekundäre Amine sind beispielsweise Di-n-butylamin, Diisopropylamin, Di-n-pentylamin, Di-n-hexylamin, Di-n-octylamin, Di-2-äthylhexylamin und Di-2-alkoxyäthylamine wie z.B. Di-2-methoxy-, Di-2-äthoxy- oder Di-2-butoxy-äthylamin, sowie solche, in denen $R^1$ und $R^2$ zu einem Ring verknüpft sind, wie z.B. Morpholin oder Piperidin.

Bevorzugt geeignet als Komponente ($b_2$) sind Di-n-butylamin, Di-2-äthylhexylamin und Di-n-hexylamin. Die Wirkungsweise dieser sekundären Amine ($b_2$) liegt vornehmlich in der Beeinflussung der Stabilitätseigenschaften der Bindemittel, außerdem tragen sie zum Verlauf und zur « inneren Weichmachung » der aus den Bindemitteln hergestellten Lackschichten bei. Sie leisten auch einen gewissen Beitrag zur Vernetzung.

Die sekundären Amine können unter anderem, bedingt durch ihre Herstellungsweise, auch Anteile entsprechender primärer Amine enthalten, doch sollte deren Anteil 20 Gewichtsprozent des sekundären Amins nicht übersteigen. Das Gewichtsverhältnis der Komponenten ($b_1$) und ($b_2$) kann zwischen 1 : 10 und 1 : 0,1, vorzugsweise zwischen 1 : 2 und 2 : 1 liegen.

(c) Als Formaldehyd bzw. Formaldehyd liefernde Verbindungen (c) werden wäßrige oder alkoholische, wie z.B. butanolische Formaldehydlösungen oder Paraformaldehyd oder deren Gemische verwendet.

Die Herstellung der Mannich-Basen A) erfolgt nach den üblichen, in der Literatur angegebenen Methoden (vgl. z.B. Houben-Weyl, Methoden der organischen Chemie, Band XI/1, Seite 731 (1957)), vorzugsweise durch Umsetzung bei Temperaturen zwischen 20 und 80 °C. Die Verhältnisse der eingesetzten Ausgangsstoffe richten sich nach den jeweils angestrebten Eigenschaften, wobei das Molverhältnis der Komponenten ($a_1$) + ($a_2$) zu den Komponenten ($b_1$) + ($b_2$) bevorzugt 1 : 0,75 bis 1 : 3 ist. Im allgemeinen wird aber auf jede phenolische Hydroxylgruppe etwa ein Mol sekundäres Amin eingesetzt. Die Menge an (c) beträgt mindestens ein Mol, bezogen auf ein Mol (b). Es ist selbstverständlich ebenfalls möglich, die olefinisch ungesättigten Alkylphenole, wie Cardanol®, mit den Mannich-Gruppen und eventuell überschüssigem Formaldehyd zur Reaktion zu bringen.

(B) Als Epoxidharze B) kommen vorzugsweise Polyepoxid-Verbindungen mit 2 bis 3 Epoxidgruppen im Molekül in Frage, wie z.B. Umsetzungsprodukte von mehrwertigen Phenolen, besonders solchen der unter ($a_1$) erwähnten Formel

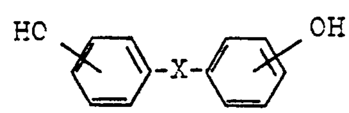

mit Epichlorhydrin, aber auch die oben erwähnten Reaktionsprodukte von mehrwertigen Alkoholen, wie z.B. Pentaerythrit, Trimethylolpropan oder Glycerin mit Epichlorhydrin; weiterhin epoxidgruppenhaltige Umsetzungsprodukte von Epoxidharzen mit sekundären Aminen oder hydroxylgruppenhaltigen Glykoläthern; ferner Epoxidharze, die Heteroatome, wie Schwefel, eingebaut enthalten. Mitumfaßt sind ebenfalls die

unter ($a_2$) genannten Epoxidharze sowie geblockte Urethangruppenenthaltende Epoxidharze wie sie in der DE-OS 22 54 080 beschrieben sind. Ganz allgemein sind alle Harzkörper geeignet, die 1,2-Epoxidgruppen enthalten und sich aus der Klasse der Polyacrylat-, Polyäther, Polyester und Polyurethan-Harze herleiten.

Zum Einsatz in ihrer erfindungsgemäßen Form können die genannten Epoxidverbindungen teilweise mit den oben genannten olefinisch ungesättigten Alkylphenolen, wie Cardanol® umgesetzt werden. Dabei sind Epoxidverbindungen mit mehr als 2 Epoxidverbindungen, z.B. 1,3,5-Trisglycidylcyanurat, besonders bevorzugt.

Um die für die Harzbildung aus den Komponenten (A) und (B) bevorzugte höhere Funktionalität der Komponente (B) sicherzustellen, können sie gegebenenfalls mit Diisocyanaten, wie Hexamethylendiisocyanat, Toluylendiisocyanat oder Polyisocyanaten, umgesetzt werden, wobei ungesättigte Gruppen enthaltende Epoxidharze mit im Mittel 2 Epoxidgruppen und mindestens einem ungesättigten aliphatischen Rest pro Molekül entstehen.

Ähnlich aufgebaute Harzkörper erhält man, wenn die Epoxidgruppen eines Harzkörpers mit den oben genannten olefinisch ungesättigten Alkylphenolen, wie Cardanol® vollständig umgesetzt werden und anschließend die Verknüpfung über ein Diisocyanat mit einem OH-Gruppen enthaltenden Polyepoxid (z.B. dem Polyglycidäther aus Pentaerythrit und Epichlorhydrin) vorgenommen wird.

Gegebenenfalls können die erfindungsgemäßen Epoxidharze mit partiell blockierten Di- und Polyisocyanaten weiterumgesetzt werden. Diese Reaktion kann auch mit der Komponente ($a_2$) durchgeführt werden. Außerdem können Epoxidharze, die aus Cardanol® auf anderen Wegen hergestellt werden, eingesetzt werden. Die Produkte können auch die Eigenschaft der Lufttrocknung besitzen. Es können z.B. Epoxidharze auf Basis Cardanol®-haltiger Novolake oder auf Basis von Cardanol®/Phenol-Reaktionsprodukten eingesetzt werden.

Die Umsetzung der Komponente (A) mit der Komponente (B) erfolgt im allgemeinen bei Temperaturen von 20 bis 100 °C, vorzugsweise von 40 bis 80 °C, bevorzugt in Gegenwart von organischen Lösungsmitteln, wie z.B. Alkoholen oder Glykoläthern.

Bei der Reaktion der Mannich-Base A) mit den Epoxidharzen B) kann als Hauptreaktion eine autokatalytische Verätherung der phenolischen Hydroxylgruppen durch die Epoxidgruppen angenommen werden.

Es ist wesentlich, daß das aus den Komponenten (A) und (B) erhaltene Umsetzungsprodukt im wesentlichen epoxidgruppenfrei ist, d.h. nicht mehr als 0,3, vorzugsweise weniger als 0,1 Epoxidgruppen pro Molekül Umsetzungsprodukt enthält. Man setzt die Komponenten zweckmäßigerweise so um, daß auf eine phenolische Hydroxylgruppe der Komponente (A) 0,1 bis 0,9, vorzugsweise 0,3 bis 0,7 Epoxidgruppen der Komponente (B) kommen. Sind die Epoxidgruppen der Komponente (B) im Überschuß vorhanden, so können sie in jedem beliebigen Stadium durch geeignete Umsetzungen, z.B. mit Säuren, Aminen oder bevorzugt Mercaptanen, wie Mercaptoäathanol oder dodecylmercaptan beseitigt werden. Der gleiche Effekt kann auch durch Umsetzung mit den olefinisch ungesättigten Alkylphenolen, wie Cardanol®, erreicht werden.

Die dabei entstehenden Produkte weisen neben dem Gehalt an aliphatischen Doppelbindungen Diäthanol- bzw. Alkyläthanol- und Dialkylaminomethyl-o-phenol-Endgruppen auf. Gegebenenfalls sind noch Urethan- und/oder verkappte Urethan-Gruppen enthalten.

Die Mengen an eingebautem olefinisch ungesättigtem Alkylphenol, wie Cardanol®, beträgt 0,5 bis 50 %, berechnet auf Festharz.

Zu den erfindungsgemäßen Bindemitteln gelangt man auch, wenn Cardanol® sowie Produkte, wie sie in der US-PS 2 128 427 beschrieben worden sind, mit den Bindemitteln nach DE-OS 2 320 301, 2 419 179 und 2 554 080, 2 541 801 gegebenenfalls unter Mitverwendung von Formaldehyd umgesetzt werden.

Über die erwähnten guten Eigenschaften der erfindungsgemäßen Bindemittel hinaus leisten die aliphatischen Doppelbindungen einen Beitrag zur Vernetzung, wobei sehr elastische Beschichtungen entstehen.

Eine Kombinationsmöglichkeit der erfindungsgemäßen Bindemittel besteht mit geblockten Polyurethanharzen auf Basis von Polyolen, Epoxidharzderivaten usw., wie z.B. nach DE-OS 27 11 425.

Die erfindungsgemäßen Lackbindemittel können mit üblichen Lacklösungsmitteln, wie z.B. Isopropanol oder Dekanol oder mit wäßrigen organischen Lösungsmitteln verdünnt und dann — gegebenenfalls zusammen mit Pigmenten, Füllstoffen und den üblichen Hilfsmitteln — unter Anwendung konventioneller Lackiermethoden wie Spritzen, Tauchen, Fluten, auf das zu lackierende Substrat, z.B. auf Holz, Metall, Glas oder Keramik aufgetragen, getrocknet und bei Temperaturen von über 150 °C gehärtet werden. Die damit erhaltenen Überzüge zeichnen sich durch hohe Härte und Lösungsmittelbeständigkeit aus.

Die Lackbindemittel werden mit Säuren, wie Phosphorsäure und ihren Derivaten, oder vorzugsweise mit wasserlöslichen Carbonsäuren, wie Essigsäure, Ameisensäure oder Milchsäure, protoniert. Das protonierte Lackbindemittel ist wasserverdünnbar und kann unter Anwendung konventioneller Lackiermethoden verarbeitet werden, wobei ebenfalls Überzüge mit wertvollen Eigenschaften erhalten werden. Der Protonierungsgrad soll so gering wie möglich gehalten werden.

Die bevorzugte Verwendung der protonierten Lackbindemittel ist jedoch die kathodische Elektrotauchlackierung elektrisch leitender Flächen, z.B. von Metallteilen, wie Blechen aus Messing, Kupfer, Aluminium, Eisen und Stahl, die gegebenenfalls chemisch vorbehandelt, z.B. phosphatiert, sind.

Die wäßrigen Lösungen oder Dispersionen der zumindest teilweise als Salz einer wasserlöslichen Carbonsäure vorliegenden Lackbindemittel können zusätzlich noch weitere kathodische abscheidbare Hilfsstoffe enthalten, wie weitere Bindemittel, Pigmente, Füllstoffe, lösliche Farbstoffe, Lösungsmittel, Verlaufsverbesserer, Stabilisatoren, Antioxidanten, Härtungskatalysatoren oder Antischaummittel.

Die erfindungsgemäßen harzartigen Produkte können sowohl als Hauptträgerharz für die elektrische Abscheidung als auch als Trägerharz in der Pigmentpaste benutzt werden. Alternativ kann das Harz als Hauptträgerharz für die elektrisch abzuscheidende Masse in Kombination mit einer üblichen Pigmentpaste verwendet werden. Außerdem kann das Harz als Trägerharz in einer Pigmentpaste in Kombination mit einem bekannten amingruppenhaltigen Trägerharz für die kathodische elektrische Abscheidung verwendet werden. Die amingruppenhaltigen, kationisch abscheidbaren Harze sind gut bekannt und müssen deshalb nicht im einzelnen beschrieben werden. Beispiele von geeigneten Harzen schließen tertiäre aminsalzhaltige Harze ein, wie sie in der DE-OS 26 03 666 offenbart sind und quaternäre ammoniumsalzgruppenhaltige Harze, wie sie in der US-PS 3 839 252 beschrieben sind.

Zur kathodischen Elektrotauchlackierung wird im allgemeinen durch Verdünnen mit entionisiertem Wasser ein Feststoffgehalt von 5 bis 20 Gewichtsprozent eingestellt. Die Abscheidung erfolgt bei Temperaturen von 15 bis 40 °C während einer Zeit von 1 bis 2 Minuten bei Bad-pH-Werten von 6,5 bis 10,2, vorzugsweise von 7,0 bis 9,0, und bei einer Abscheidungsspannung zwischen 50 und 500 Volt. Nach dem Abspülen des auf dem elektrisch leitenden Körper kathodisch abgeschiedenen Films wird dieser bei etwa 150 bis 200 °C 10 bis 30 Minuten, vorzugsweise bei 160 bis 200 °C 20 Minuten gehärtet.

Die Vernetzung der Bindemittel beim Einbrennen erfolgt neben der oben erwähnten Reaktion (Doppelbindungen) über die Alkanolaminomethyl-Gruppe. Außerdem ist wohl auch die Dialkylaminomethyl-Gruppe beteiligt; die Isocyanatgruppen der gegebenenfalls vorhandenen blockierten Isocyanate tragen im allgemeinen zur Vernetzung wenig bdi. Sie fangen vielmehr beim Einbrennen frei werdende Amine ab, wobei ein nucleophiler Austausch zwischen Amin und Blockierungsmittel stattfindet. Dabei wird dann das wesentlich weniger umweltbelastende Blockierungsmittel, d.h., bevorzugt ein niedriger aliphatischer Alkohol, freigesetzt.

Die erfindungsgemäßen Überzugsmittel ergeben beim Auftrag auf die Substrate Überzüge mit guten mechanischen Eigenschaften; insbesondere zeigen sie gute Härte und Kratzfestigkeit bei guter Elastizität und fester Haftung. Weiterhin weisen die Überzüge hohe Lösungsmittelbeständigkeit und besonders hohe Beständigkeit im Salzprühtest auf.

Die im folgenden und in den Beispielen genannten Teile und Prozente beziehen sich auf das Gewicht.

Herstellung der Komponente ($a_2$) (I)

525 Teile eines Glycidyläthers auf Basis Pentaerythrit (Epoxidwert 0,57 bis 0,6) und 294 Teile Cardanol ® werden 30 Minuten auf 180 °C erhitzt. Anschließend werden 456 Teile Bisphenol A zugesetzt und der Ansatz innerhalb 30 Minuten wieder auf 180 °C aufgeheizt und bei dieser Temperatur 2 Stunden gehalten. Danach wird auf 130 °C abgekühlt und mit 685 Teilen Isobutanol verdünnt. Der Festgehalt beträgt 65,5 %.

Herstellung der Komponente ($a_2$) (II)

410,0 Teile der Komponente (B) (= Umsetzungsprodukt aus Epoxidharz und Cardanol ®), werden mit 164,0 Teilen Bisphenol A 2 Stunden auf 160 °C erhitzt. Anschließend werden 63,0 Teile Hexamethylendiisocyanat bei 100 °C zugetropft und 1 Stunde bei 100 °C nachgerührt. Mit 316,0 Teilen Isobutanol wird das Harz auf einen Festgehalt von 70 % verdünnt.

Herstellung der Komponente (B)

390 Teile eines Diglycidyläthers auf Basis Bisphenol A (Epoxidwert 0,5) werden mit 210,0 Teilen Cardanol ® 3 Stunden unter Stickstoff auf 160 °C erhitzt. Anschließend werden 63,0 Teile Hexamethylendiisocyanat bei 100 °C zugetropft und 1 Stunde nachgerührt. Nach dem Verdünnen mit 115,0 Teilen Isobutanol erhält man ein klares Harz (Epoxidwert 0,15, bezogen auf Festharz) mit einem Festgehalt von ca. 80 %.

Beispiel 1

Elektrotauchlackbindemittel

140,0 Teile Diäthanolamin, 54,0 Teile Di-n-butylamin, 74,5 Teile Di-n-hexylamin und 191,0 Teile der Komponente ($a_2$) (I), 187,5 Teile Bisphenol A und 69 Teile Paraformaldehyd in 98 Teilen Isobutanol werden 3 Stunden bei 80 °C erhitzt. Anschließend werden 150,0 Teile eines Diglycidyläthers auf Basis Bisphenol A (Epoxidwert 0,20), 82,0 Teile eines Diglycidyläthers auf Basis Pentaerythrit (Epoxidwert 0,57 bis 0,6) und 60,0 Teile Isobutanol zugesetzt und 5 Stunden bei 70 °C gehalten. Das klare Bindemittel besitzt einen Festgehalt von 72 %. Zur Herstellung eines 1,4 1-Lackbades werden 194,0 Teile Bindemittel und 2,1 Teile Eisessig mit Wasser verdünnt (pH : 8,35). Nach dem Ausrühren des Lösungsmittels werden zinkphosphatierte Stahlbleche, die wassergespült und luftgetrocknet waren, bei 210 V/30 °C 2 Minuten beschichtet

und 20 Minuten bei 190 °C eingebrannt. Die Beschichtungen von 15 µm Schichtdicke wurden dem Salzsprühtest nach DIN 50 021 unterzogen und ergaben nach 10 Tagen Werte von 5,5 bis 8 mm.

Nach DE-PS 24 19 179, Beispiel 5, entsprechend hergestellte vergleichbare Beschichtungen zeigten Werte von > 10 mm.

Beispiel 2

Elektrotauchlackbindemittel

130,0 Teile Diäthanolamin, 107,5 Teile Di-n-butylamin, 187,5 Teile Bisphenol A, 72,5 Teile Paraformaldehyd und 160 Teile Äthylglykol werden 3 Stunden bei 80 °C erhitzt. Anschließend werden 450,0 Teile der Komponente (B) und 140,0 Teile eines Urethangruppen enthaltenden Epoxidharzes, 77 %ig in Isobutanol, nach DE-OS 25 41 801, Beispiel B a zugesetzt und 5 Stunden bei 70 °C zur Reaktion gebracht. Das helle, klare Harz besitzt einen Festgehalt von ca. 70 %. 1 Liter eines 10 %igen Lackbades erhält man durch Verdünnen von 143,0 Teilen des Bindemittels und 1,2 Teilen Eisessig mit entionisiertem Wasser (Bad-pH 8,6). Nach dem elektrophoretischen Beschichten bei 200 V/25 °C und Einbrennen bei 180 °C/20 Minuten erhält man glatte Beschichtungen und 14 bis 17 µm Schichtdicke.

Beispiel 3

Elektrotauchlack

Ein 2 1-Lackbad wird hergestellt aus 207,0 Teilen des nach Beispiel 2 erhaltenen Bindemittels, 18 Teilen eines Polybutadienöls (mittleres MG 1450, JZ ca. 450) und 1,7 Teilen Eisessig. Der gut gemischten Bindemittelkombination werden 262,0 Teile einer Pigmentmahlung, die aus einem Gemisch aus 80,0 Teilen des nach Beispiel 2 erhaltenen Bindemittels, 28,0 Teile China Clay, 14,0 Teile Talkum, 5 Teile Ruß, 0,30 Teile Eisessig und 150 Teile Wasser hergestellt wurde, zugefügt und durch Eingießen in Wasser dispergiert. Der Bad-pH-Wert beträgt 8,45.

Beschichtungen auf horizontal angeordneten Werkstücken (sog. L-Blechen) bei 150 bis 200 V/25 °C weisen ein ausgezeichnetes Aussehen auf.

**Ansprüche**

1. Im wesentlichen epoxidgruppenfreies Lackbindemittel auf Basis eines Umsetzungsproduktes von

A) 25 bis 90 Gewichtsprozent Mannich-Basen aus

($a_1$) mindestens einem äthergruppenfreien, mehrwertigen Phenol, das zwei oder mehr aromatische Ringe enthält, und/oder

($a_2$) mindestens einem mindestens eine Äthergruppe enthaltenden ein- oder mehrwertigen Phenol, das zwei oder mehr aromatische Ringe enthält,

($b_1$) mindestens einem sekundären Amin, das ein oder zwei Hydroxylalkylgruppen enthält, gegebenenfalls im Gemisch mit

($b_2$) sekundären Dialkyl- oder Dialkoxyalkylaminen, und

(c) Formaldehyd oder Formaldehyd bildenden Verbindungen

und

B) 75 bis 10 Gewichtsprozent mindestens eines Epoxidharzes, *dadurch gekennzeichnet,* daß das Umsetzungsprodukt aus (A) und (B) zusätzlich ein olefinisch ungesättigtes Alkylphenol der allgemeinen Formel (I)

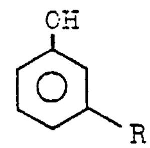

eingebaut enthält, mit der Maßgabe, daß R für einen eine bis drei C-C-Doppelbindungen enthaltenden Rest mit 11 bis 19 Kohlenstoffatomen steht.

2. Lackbindemittel nach Anspruch 1, *dadurch gekennzeichnet,* daß das olefinisch ungesättigte Alkylphenol der allgemeinen Formel (I)

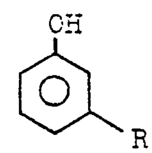

Cardanol ® ist.

3. Lackbindemittel nach Anspruch 1 oder 2, *dadurch gekennzeichnet,* daß als Komponente ($a_1$) ein zwei phenolisches Hydroxylgruppen enthaltendes Kondensationsprodukt aus einem Phenol und einem olefinisch ungesättigten Alkylphenol der Formel (I) verwendet wird.

4. Lackbindemittel nach einem der vorhergehenden Ansprüche, *dadurch gekennzeichnet,* daß als Komponente ($a_2$) ein Umsetzungsprodukt aus einem Epoxidharz, einem olefinisch ungesättigten Alkylphenol der Formel (I), Bisphenol A und einem, gegebenenfalls teilweise verkappten, aliphatischen oder aromatischen Diisocyanat verwendet wird.

5. Lackbindemittel nach einem der vorhergehenden Ansprüche, *dadurch gekennzeichnet,* daß als Komponente B) ein epoxidgruppenhaltiges Umsetzungsprodukt aus einem Epoxidharz und einem olefinisch ungesättigten Alkylphenol der Formel (I) verwendet wird.

6. Lackbindemittel nach Anspruch 1, *dadurch gekennzeichnet,* daß als Komponente B) ein Epoxidgruppen und, gegebenenfalls verkappte,

Isocyanatgruppen enthaltendes Umsetzungsprodukt aus Epoxidharz, einem olefinisch ungesättigten Alkylphenol der Formel (I) und einem teilweise verkappten Di- oder Polyisocyanat verwendet wird.

7. Lackbindemittel mit phenolischen Endgruppen nach einem der vorhergehenden Ansprüche, *dadurch gekennzeichnet,* daß das Bindemittel 0,5 bis 50 Gew. % eines olefinisch ungesättigten Alkylphenols der Formel (I) enthält.

8. Lackbindemittel nach einem der vorhergehenden Ansprüche, *dadurch gekennzeichnet,* daß für den Aufbau der Mannich-Basen (A) das Molverhältnis der Komponenten $(a_1) + (a_2)$ zu dem Komponenten $(b_1) + (b_2)$ 1 : 0,75 bis 1 : 3 beträgt und pro Mol sekundäres Amin mindestens ein Mol Formaldehyd eingesetzt wird.

9. Lackbindemittel nach einem der vorhergehenden Ansprüche, *dadurch gekennzeichnet,* daß Mannichbase (A) mit Epoxidharz (B) so miteinander umgesetzt werden, daß auf jede phenolische Hydroxylgruppe der Komponente (A) 0,1 bis 0,9 Epoxidgruppen der Komponente (B) kommen.

10. Verwendung des Lackbindemittels nach einem der vorhergehenden Ansprüche in protonierter Form zur kathodischen Elektrotauchlackierung von Metallteilen.

## Claims

1. A surface-coating binder which is substantially free from epoxide groups and is based on a reaction product of

A) from 25 to 90 per cent by weight of a Mannich base obtained from

($a_1$) one or more polyhydric phenols which are free from ether groups and contain two or more aromatic rings, and/or

($a_2$) one or more monohydric or polyhydric phenols which contain one or more ether groups and contain two or more aromatic rings, and

($b_1$) one or more secondary amines which contain one or two hydroxyalkyl groups, or a mixture of ($b_1$) with

($b_2$) a secondary dialkylamine or dialkoxyalkylamine, and

(c) formaldehyde or a formaldehyde donor, and

B) from 75 to 10 per cent by weight of one or more epoxy resins, *characterized in that* the reaction product of (A) and (B) additionally contains, built into its chemical structure, an olefinically unsaturated alkylphenol of the general formula (I)

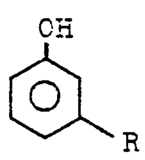

where R is a radical of 11 to 19 carbon atoms which contains from one to three carbon-carbon double bonds.

2. A surface-coating binder as claimed in claim 1, wherein the olefinically unsaturated alkylphenol of the general formula (I)

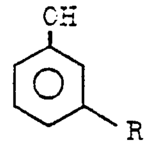

is Cardanol ®.

3. A surface-coating binder as claimed in claim 1 or 2, *characterized in that* component ($a_1$) is a condensation product, containing two phenolic hydroxyl groups, of a phenol and an olefinically unsaturated alkylphenol of the formula (I).

4. A surface-coating binder as claimed in any of the preceding claims, *characterized in that* component ($a_2$) is a reaction product of an epoxy resin, an olefinically unsaturated alkylphenol of the formula (I), bisphenol A and an aliphatic or aromatic diisocyanate which may or may not be partially blocked.

5. A surface-coating binder as claimed in any of the preceding claims, *characterized in that* component (B) is a reaction product, containing epoxide groups, of an epoxy resin and an olefinically unsaturated alkylphenol of the formula (I).

6. A surface-coating binder as claimed in claim 1, *characterized in that* component (B) is a reaction product, containing epoxide groups and isocyanate groups which may or may not be blocked, of an epoxy resin, an olefinically unsaturated alkylphenol of the formula (I) and a partially blocked diisocyanate or polyisocyanate.

7. A surface-coating binder with phenolic end groups as claimed in any of the preceding claims, *characterized in that* the binder contains from 0.5 to 50 % by weight of an olefinically unsaturated alkylphenol of the formula (I).

8. A surface-coating binder as claimed in any of the preceding claims, *characterized in that,* for the synthesis of the Mannich base (A), the molar ratio of components $(a_1) + (a_2)$ to components $(b_1) + (b_2)$ is from 1 : 0.75 to 1 : 3 and at least one mole of formaldehyde is employed per mole of secondary amine.

9. A surface-coating binder as claimed in any of the preceding claims, *characterized in that* the Mannich base (A) and the epoxy resin (B) are reacted with one another in such amounts as to provide from 0.1 to 0.9 epoxide group of component (B) per phenolic hydroxyl group of component (A).

10. Use of a surface-coating binder as claimed in any of the preceding claims in protonized form for the cathodic electrocoating of metal parts.

## Revendications

1. Liant pour peinture ou vernis essentiellement exempt de groupes époxyde, à base d'un produit de réaction de

A) 25 à 90 % en poids de bases de Mannich obtenues à partir

($a_1$) d'au moins un phénol polyvalent exempt de groupes éther, comportant deux ou plus de deux noyaux aromatiques, et/ou

($a_2$) d'au moins un phénol mono- ou polyvalent contenant au moins un groupe éther et comportant deux ou plus de deux noyaux aromatiques,

($b_1$) d'au moins une amine secondaire contenant un ou deux groupes hydroxyalkyle, le cas échéant en mélange avec

($b_2$) des dialkyl- ou dialkoxyalkylamines secondaires et

(c) du formaldéhyde ou des composés susceptibles de former du formaldéhyde

et

B) 75 à 10 % en poids d'au moins une résine époxyde, caractérisé par le fait que le produit de réaction de (A) et de (B) renferme additionnellement un alkylphénol à insaturation oléfinique, de formule générale (I)

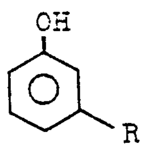

dans laquelle R représente un reste en $C_{11}$ à $C_{19}$ comportant une à trois doubles liaisons C-C.

2. Liant selon la revendication 1, dans lequel l'alkylphénol à insaturation oléfinique de formule générale (I)

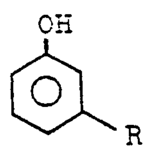

est le Cardanol ®.

3. Liant selon l'une des revendications 1 et 2, dans lequel on utilise, comme composant ($a_1$), un produit de condensation portant deux groupes hydroxyle phénoliques et obtenu à partir d'un phénol et d'un alkylphénol à insaturation oléfinique de formule (I).

4. Liant selon l'une des revendications précédentes, dans lequel le composant ($a_2$) est un produit de réaction d'une résine époxyde, d'un alkylphénol à insaturation oléfinique de formule (I), de bis-phénol A et d'un diisocyanate aliphatique ou aromatique, le cas échéant partiellement masqué.

5. Liant selon l'une des revendications précédentes, dans lequel le composant (B) est un produit de réaction renfermant des groupes époxyde, obtenu à partir d'une résine époxyde et d'un alkylphénol à insaturation oléfinique de formule (I).

6. Liant selon la revendication 1, dans lequel le composant (B) est un produit de réaction renfermant des groupes époxyde et, le cas échéant, des groupes isocyanate masqués, et est obtenu à partir d'une résine époxyde, d'un alkylphénol à insaturation oléfinique de formule (I) et d'un di- ou polyisocyanate partiellement masqué.

7. Liant portant des groupes phénoliques terminaux selon l'une des revendications précédentes, dans lequel le liant renferme 0,5 à 50 % en poids d'un alkylphénol à insaturation oléfinique de formule (I).

8. Liant selon l'une des revendications précédentes, dans lequel on utilise, pour l'élaboration des bases de Mannich (A), un rapport molaire des composants ($a_1$) + ($a_2$) aux composants ($b_1$) + ($b_2$) de 1/0,75 à 1/3 et on utilise, par mole d'amine secondaire, au moins un mole de formaldéhyde.

9. Liant selon l'une des revendications précédentes, dans lequel la base de Mannich (A) est mise à réagir avec la résine époxyde (B) de manière qu'il y ait 0,1 à 0,9 groupe époxyde du composant (B) pour chaque groupe hydroxyle phénolique du composant (A).

10. Emploi du liant selon l'une des revendications précédentes, sous forme protonée, pour l'électrodéposition cathodique de pièces métalliques.